# EUROPEAN PATENT APPLICATION

(11) **EP 4 513 029 A1**
(43) Date of publication of application: **26.02.2025**
(21) Application number: 23193493.6
(22) Date of filing: 25.08.2023
(51) Int. Cl.: F03D 9/25, F03D 13/25

(54) **A POWER COLLECTION SYSTEM FOR OFFSHORE POWER GENERATION UNITS**

(71) Applicant: ABB SCHWEIZ AG, 5400 Baden (CH)
(72) Inventor: INGEBRIGTSEN, Stian, 5252 Bergen (NO); MARTINSEN, Oistein, 1353 Bærums Verk (NO); FRETHEIM, Harald, 1930 Aurskog (NO); MORITSUGU, Vitor, 5254 Bergen (NO)
(74) Representative: Kransell & Wennborg KB

(57) **Abstract**

A power collection system (100) for collecting power from a plurality of offshore power generation units (110), comprising: a plurality of subgrids (123), each of which interconnects a cluster of one or more power generation units; a subsea power collector module (150) comprising a plurality of individually switchable input terminals (151), each connected to one of the subgrids, and one output terminal (152); and a subsea power substation (130) comprising at least one input terminal (133) connected to the output terminal of the power collector module and at least one transformer (140), which is shared by two or more clusters of power generation units, wherein a secondary side (132) of the power substation is arranged to be connected to a power consumer (170).

## Description

### TECHNICAL FIELD

The present disclosure relates to the field of offshore power generation. In particular, it proposes a novel power collection system where clusters of offshore power generation units are connected via individually switchable subgrids.

### BACKGROUND

The offshore wind power generation market is on the rise. The worldwide wind power capacity is expected to increase by about 12 GW per year, reaching a total of 150 GW installed power by 2027. Much of the ongoing research efforts are directed at upscaling, including higher power ratings and larger installations. On the one hand, the wind turbines are getting larger, with typical unit sizes being expected to reach the range of 15-20 MW. On the other hand, a shift from bottom-fixed wind turbines to floating wind turbines is about to take off. Floating installations seem to be best suited for realizing large-scale offshore wind parks, indeed, since they are less dependent on the availability of a favorable seabed topography and can be localized further from the shoreline where the richest wind resources are.

A power collection system refers to the cabling and components responsible for collecting the electric power generated by a park of floating wind turbines and for making it suitable for transmission and/or later use by a power consumer. For example, a number of electric power contributions collected at an intermediate voltage (e.g., 66 kV) may be combined and up-transformed (e.g., to 245 kV), and then conveyed to an onshore grid through a transmission cable. The power collection system may be a subsea system (i.e., which rests on the seabed) or a floating power collection system. Subsea power collection systems are easier to maintain as they operate in more stable environmental conditions, and the installation and decommissioning of dynamic transmission cables is generally simpler. Early results suggest that this category of power collection systems is more robust and incurs a more limited capital and operational expenditure than floating ones.

Maintenance and repair operations on subsea power installations have a relatively high unit cost, since normally diving or lifting is required, and similar difficulties are to be expected when an existing facility is to be extended. The electric components must of course be protected from leaking seawater as well. This is possible to achieve by known techniques, such as by oil-filling and/or specialized sealing arrangements, but this could incur significant cost if the volume or the physical extent of the subsea units grows large, notably for installation and decommissioning works to be carried out from a marine vessel. The option of including redundant capacity (e.g., additional output terminals for potential future use) already on the design stage is thus usually not economically viable in a subsea use case.

The applicant's earlier disclosure EP4063646A1 proposed a power extender module, which had been conceived with a view to making offshore power collection systems easier to reconfigure or extend once installed. The power extender module was also expected to provide more precise isolation of electric faults at runtime, and an ability to isolate not yet finished sections of the system. Despite the proposals made in EP4063646A1, the flexibility and robustness of offshore power collection systems can still be improved.

### SUMMARY

One objective of the present disclosure is to make available a power collection system with improved sectioning functionalities. In particular, when electric faults can be isolated at runtime without sacrificing large parts of the system, the power collection system becomes scalable without detriment to safety. In a partly finished windfarm, furthermore, if the sectioning functionalities are used to isolate the sections still under construction from the active wind generators, the production and thus the revenue flow can begin early. Another objective of the present disclosure is to enable easy upscaling of an existing power collection system (e.g., by adding more power generation units) without having to tie up capital in redundant capacity.

At least some of these objectives are achieved by the invention as defined by claim 1. The dependent claims relate to advantageous embodiments.

In a first aspect of the disclosure, a power collection system for collecting power from a plurality of offshore power generation units is proposed. The power collection system comprises: a plurality of subgrids, each of which interconnects a cluster of one or more power generation units; a subsea power collector module comprising a plurality of individually switchable input terminals, each connected to one of the subgrids, and one output terminal; and a subsea power substation comprising at least one input terminal connected to the output terminal of the power collector module and at least one transformer, wherein a secondary side of the power substation is arranged to be connected to a power consumer. The transformer is shared by two or more clusters of power generation units, in the sense that the transformer processes power contributions from all of these.

By equipping the power collection system with the power collector module, it becomes possible to connect an increased number of subgrids to each input terminal of the subsea power substation. Further, it becomes possible to extend the power collection system with a number of further subgrids, as needed, without modifying the subsea power substation. It is noted that this extendibility is achieved without burdening the subsea power substation - which is already a complex module - with additional circuitry. The fact that the power collector module has individually switchable input terminals makes precise sectioning of the power collection system possible, which brings benefits both during phases of localized repair, maintenance or construction, and when electric faults are discovered at runtime. It is recalled that repair and maintenance operations on a subsea unit are generally performed topside, i.e., they require lifting the subsea unit to the sea surface.

In different embodiments of the power collection system, the subsea power substation and the subsea power collector module may be contained in separate housings, or they may share a common housing.

In some embodiments, the subgrids may have a radial or tree-like topology (when the subgrid is connected to a single input terminal of the power collector module) or a ring-shaped or another closed topology (when the subgrid is connected to two input terminals of the power collector module). The ring topology provides, at the cost of somewhat more extensive cabling, more sectioning options and thus contributes to the robustness of the power collection system.

In some embodiments, the power collector module further includes a protection and control functionality configured to decouple one of the connected subgrids in response to a predefined condition representing a malfunction. The predefined condition may be determined based on data from a current sensor or data from a voltage sensor or a combination of these. The protection and control functionality may receive this data directly from the current and voltage sensors, or by the intermediary of a metering interface.

In some embodiments, the power collection system is provided with a data network which connects the power collector module and the power substation, and by which protection and control functionalities can be coordinated. The data network may also allow delegation, among modules in the power collection system, of protection and control functionalities. This allows the power substation to perform coordinated fault isolation in the power collection system (or a section thereof) by means of at least one connected power collector module.

In some embodiments, the power generation units in at least one of the clusters are connected to the subgrid via respective subsea power extender modules. The power extender modules are arranged in series through interconnection terminals, and the power generation units connected thereto can be decoupled individually if needed. Thanks to the power extender modules, the topology and size of the power collection system can be easily extended as needed while retaining an ability to section the system precisely at runtime in case of electric faults. To this end, in specific embodiments, one or two of the power extender module's interconnection terminals may be switchable; one switchable interconnection terminal per power extender module may be considered sufficient if the subgrid has a ring topology.

In a second aspect of the present disclosure, there is provided a subsea power collector module comprising a plurality of individually switchable input terminals and one output terminal. Each of the input terminals is adapted to be connected to a subgrid, which interconnects a cluster of offshore power generation units. The output terminal is adapted to be connected to an input terminal of a subsea power substation.

The subsea power collector module according to the second aspect makes it possible to connect an increased number of subgrids to each input terminal of the subsea power substation. Further, it becomes possible to extend the power collection system with a number of further subgrids, as needed, without modifying the subsea power substation. It is also helpful for sectioning the power collection system in case of electric faults or localized repair, maintenance or construction works.

In the present disclosure, the term "power consumer" is used in an abstract (or black-box) sense and from the perspective of the subsea power substation. Accordingly, it covers not only devices which themselves dissipate electric power, but also devices that convert electric power, including a transmission cable (or export cable), an onshore substation, an offshore or onshore energy storage device, an offshore or onshore hydrogen converter, and the like.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, on which:
figure 1 shows a power collection system arranged between a number of offshore power generation units and a power consumer;
figure 2 shows a power collection system which includes multiple power extender modules arranged in series;
figure 3 shows a power collection system which includes a star-like arrangement of multiple power collector modules;
figure 4A is a block diagram of a power collection system which includes multiple power collector modules, each connected to a subgrid of the power collection system;
figure 4B shows a detail of the power collection system of figure 4A;
figure 4C shows an alternative implementation of the power collection system in figure 4A;
figure 5 shows three serially connected power extender modules, through which respective power generation units are connected to a subgrid of the power collection system;
figures 6 and 7 shows example inner structures of a power extender module;
figure 8 shows an example inner structure of a power extender module with an externalized protection and control functionality;
figure 9 shows an example inner structure of a power collector module;
figure 10A is a block diagram of a power collection system;
figure 10B shows an alternative implementation of the power collection system in figure 10A;
figure 11 shows a power collection system comprising a subgrid with a radial topology; and
figure 12 shows a power collection system comprising a subgrid with a ring topology.

### DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

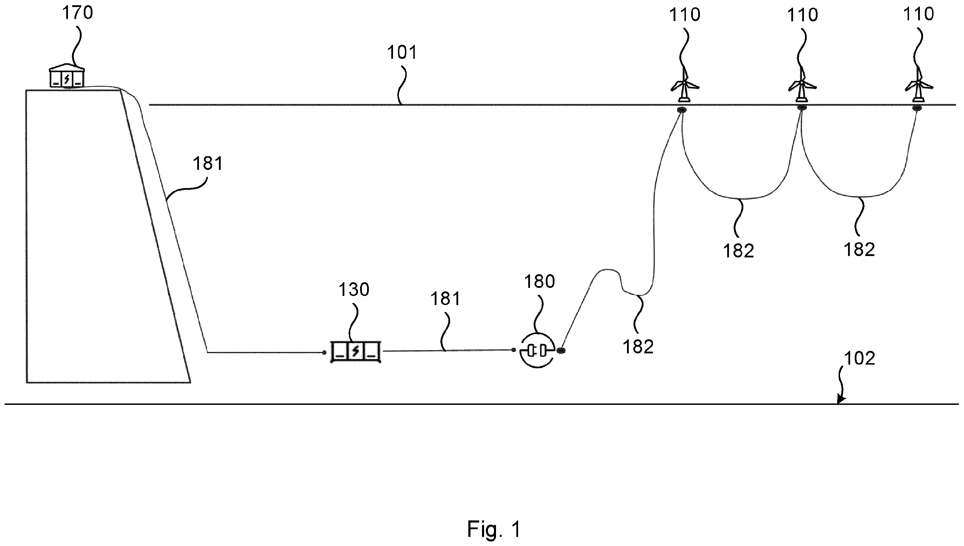

Figure 1 shows a power collection system which is arranged between a number of offshore power generation units 110, located approximately at the level of the sea surface 101, and a power consumer 170. The power generation units 110 form a string in the sense that they are connected in series by means of dynamical sea cables 182, and the string is in turn connected to a joint 180. From the joint 180, a first static sea cable 181 leads up to a subsea power substation 130, which includes one or more power transformers, and a second static sea cable 181 continues to the power consumer 170. To decouple the string of power generation units 110 electrically from the power collection system, if needed, the subsea power substation 130 can be used.

The power substation 130 and joint 180 are subsea units in the sense that they are arranged to rest on the seabed 102. They are contained in housings designed to be watertight in seabed conditions, i.e., they are equipped with seals that withstand the hydrostatic pressure at the level of the seabed, and they are manufactured from materials suitable for long-term use in seawater. A representative depth may be 100 m or more, such as 200 m or more, such as 300 m or more, such as 500 m or more, such as 1000 m or more. The housings of subsea units may be specified for operation at a maximum depth of the order of 1500 m.

In line with ordinary terminology in the field of subsea power technology, a dynamic sea cable is a cable designed for repeated deformations and/or mechanical loading and unloading. In broad terms, dynamic sea cables differ from equivalent static sea cable by having a better resistance to material fatigue caused by deformation and optionally by being provided with floating bodies. A dynamic sea cable is generally costlier to manufacture and maintain than a static sea cable for the same use case.

In the terminology of the present disclosure, further, the units designated as a power consumer 170 act as consumers from the perspective of the subsea power substation 130. This is to say, a power consumer 170 may perform energy conversion itself or may facilitate energy conversion in an entity further downstream. Accordingly, the power consumer 170 may for example be a static or dynamic transmission cable (or export cable), an onshore power substation, an offshore or onshore energy storage device (e.g., battery), an offshore or onshore hydrogen converter, and the like. The power consumer is exemplified in figure 1 as an onshore power substation 170, possibly including the second static sea cable 181.

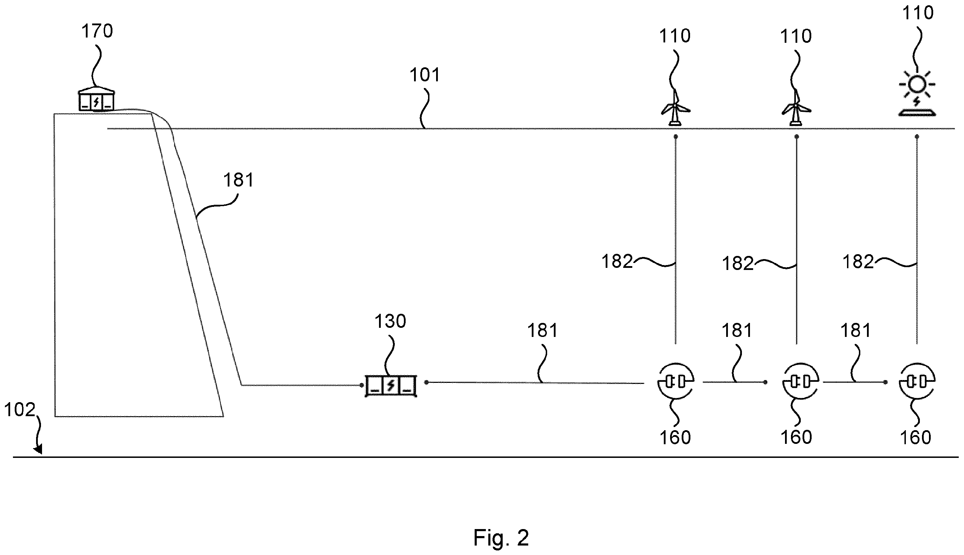

Figure 2 shows a further power collection system, which collects electric power from offshore power generation units 110 at a subsea power substation 130, from which the electric power is transmitted by cable to a power consumer 170. It differs from the power collection system of figure 1 in that each power generation unit 110 is connected via an individual power extender module 160. One the one hand, this allows the power generation units 110 to be decoupled one by one, so that a number of functioning power generation units 110 can continue production if one power generation unit 110 has to be taken out of operation. On the other hand, static sea cables 181 can be used for the connections between the power extender modules 160. For use cases where the power generation units 110 are wind turbines, which typically have a horizontal spacing of at least ten times the sea depth, this means the total consumption of dynamic sea cable 182 is significantly reduced compared to the system shown in figure 1.

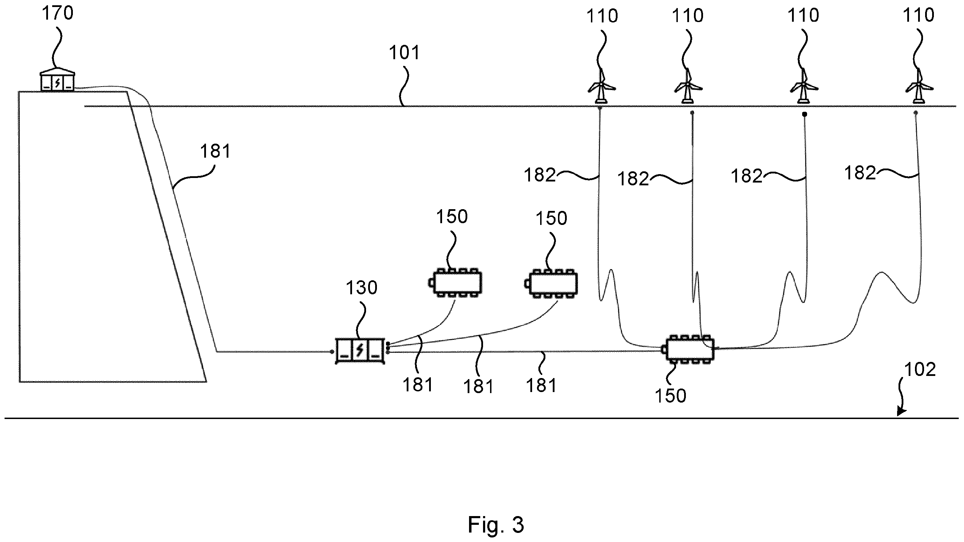

Figure 3 shows a further power collection system, which collects electric power from floating offshore power generation units 110 at a subsea power substation 130, from which the electric power is transmitted by cable to a power consumer 170. The power collection system in figure 3 may be said to have a cascaded star topology. The input terminals of the power substation 130 are connected to a plurality of power collector modules 150. Each power collector module 150 has a plurality of individually switchable input terminals which are connected via dynamical sea cables 182 to the power generation units 110. Because the power collector modules 150 are arranged on the seabed 102, they can be connected to the power substation 130 by static sea cables 181. Thanks to the power collector modules 150, the power generation units 110 can be decoupled one by one, so that a number of functioning power generation units 110 may continue production if one power generation unit 110 has to be taken out of operation.

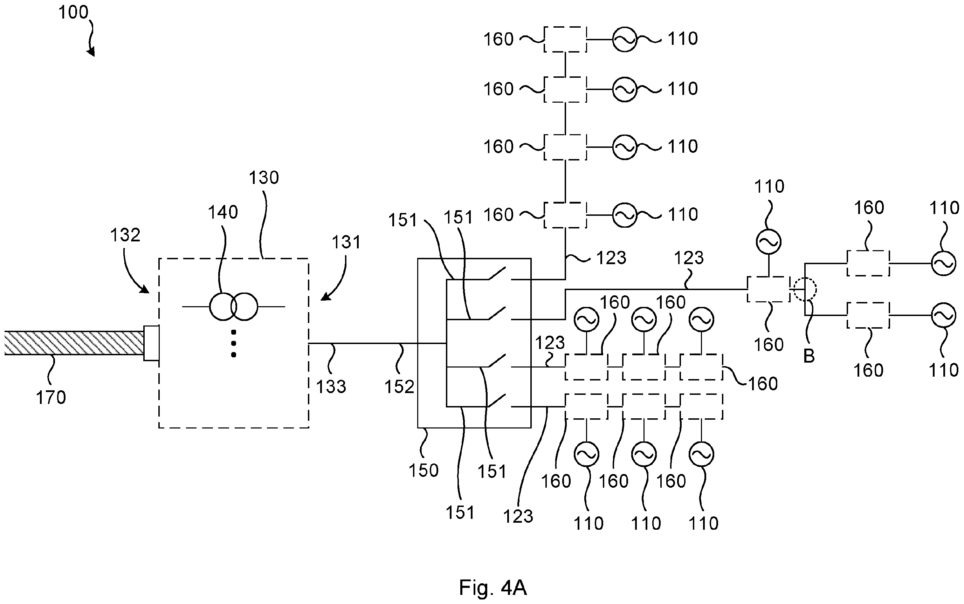

Figure 4A is a block diagram of a power collection system 100 according to some embodiments. The power collection system 100 includes a plurality of subgrids 123, a power collector module 150 and a subsea power substation 130, which is to be connected to a power consumer 170 in the sense discussed above. Each subgrid 123 includes at least one segment of static or dynamic sea cable that interconnects a cluster of one or more power generation units 110 (i.e., the power generation units 110 in the cluster are connected to each other by the cables).

The offshore power generation units 110 may include floating or fixed-support devices, such as one or more (floating) wind turbines, (floating) solar cell arrangements (see figure 2), (floating) wave energy converters, or combinations of one or more of these. The power generation units 110 may be configured to generate three-phase electric power, wherein a three-phase subgrid 123 may be used. Alternatively, the power generation units 110 may be configured to generate one-phase electric power, in which case a one-phase subgrid can be used. Another option is to use a three-phase subgrid 123, wherein three subgroups of the power generation units 110 may be connected to the three phases in an approximately balanced fashion. The power generation units 110 may include units with a rated output power of the order of 1 MW or more, such as output power in the range of 15-20 MW or more. The power generation units 110 may be of a uniform type with equal power ratings, or they may have different power ratings. In the case of large-scale floating wind turbines, the horizontal spacing of the power generation units 110 may be of the order of 1 km, such as 2 km or more.

The subsea power collector module 150 has a plurality of individually switchable input terminals 151, which each can be connected to a subgrid 123, and one output terminal 152. The input terminals 151 may be switched by means of circuit breakers or off-load connectors.

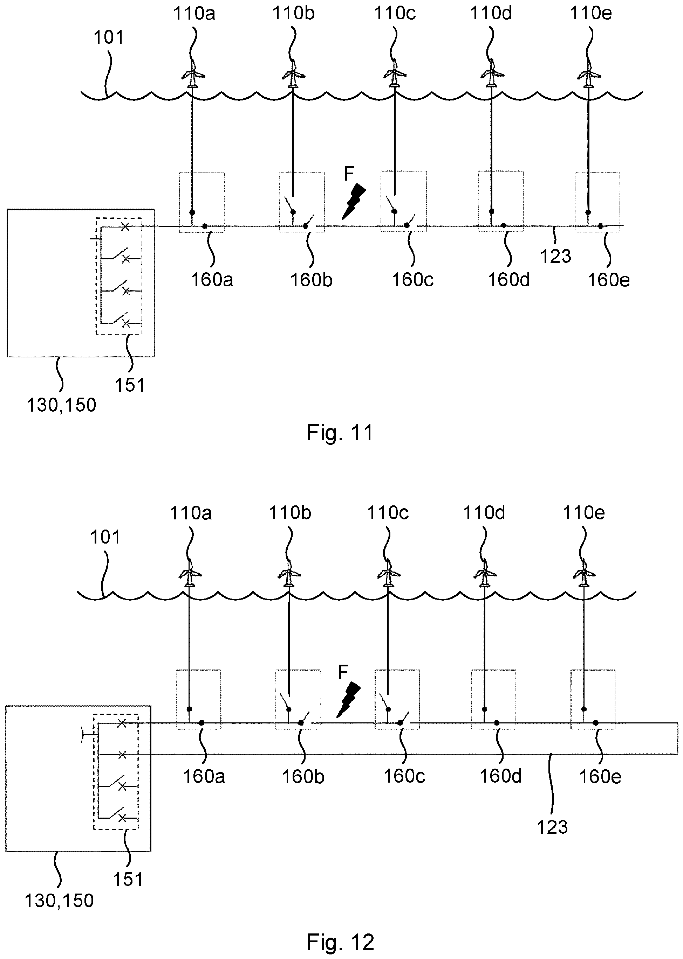

In the power collection system 100 shown in figure 4A, the first, third and fourth subgrids 123 have an unbranched radial topology, and the second subgrid has a branched radial topology because of the branching point B. In this case, the subgrid 123 is connected to a single input terminal 151 on the power collector module 150. In other embodiments, a subgrid 123 may further have a ring topology (see figure 12), in which case the subgrid 123 is connected to two input terminal 151 of the power collector module 150.

Neither the composition, the size nor the geographic extent of a cluster of power generation units 100 is an essential feature of the invention, but these aspects may be chosen freely by those who put the teachings of the present disclosure to use. For example, a population of power generation units 100 with known geographic positions may be partitioned into clusters based on one or more of the following rationales:
- minimize total consumption of sea cable;
- minimize consumption of dynamic sea cable;
- respect a current rating of switches in the power collector module 150;
- ensure that the power generation units 100 in a cluster are reasonably grouped geographically, such that maintenance on geographically nearby power generation units 100 can be carried out while just a single cluster (subgrid 123) is decoupled.

The subsea power substation 130 in the power collection system 100 comprises at least one input terminal 133 connected to the output terminal 152 of the power collector module 150. Preferably, the subsea power substation 130 and the power collector module 150 are provided in separate housings. The subsea power substation 130 further comprises at least one transformer 140, which is shared by two or more clusters 123 of power generation units 100. Each of the transformers 140 has a primary side corresponding to a primary winding, and a secondary side corresponding to a secondary winding. In steady-state operation, net power generally flows from the primary side to the secondary side. The orientation of the primary and secondary sides of the transformers 140 defines a primary side 131 and a secondary side 132 of the power substation 130. The primary side 131 of the power substation 130 interfaces with the power collector module 150, and the secondary side 132 is arranged to interface with the power consumer 170.

An indicative primary voltage of the power substation 130 may be 60 kV or 66 kV, and an indicative secondary voltage may be 245 kV. These values of the primary and secondary voltage correspond, respectively, to the voltage of the subgrid 123 and the voltage supplied to the power consumer 170. The power rating of the power collection system 100, which corresponds to the power rating of the power substation 130, may be 200 MVA or more, 400 MVA or more, 600 MVA or more, and possibly up to 900 MVA.

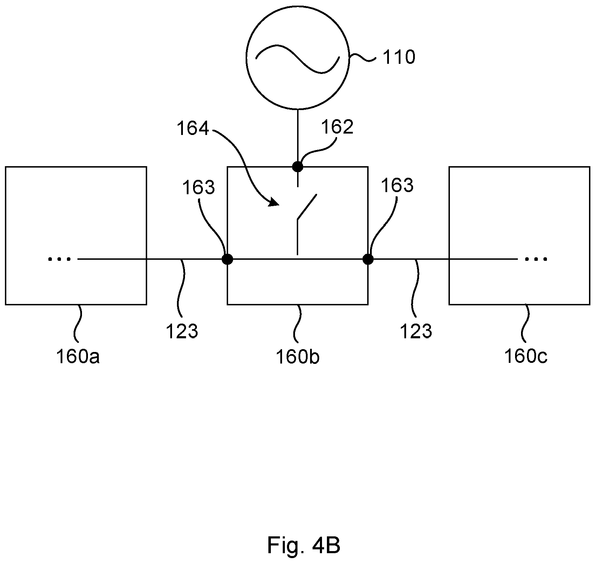

In some embodiments of the power collection system 100, as suggested by the use of dashed line in figure 4A, one or more of the subgrids 123 include power extender modules 160 which are used as intermediaries for connecting the offshore power generation units 110 to the subgrid 123. For this purpose, as shown in figure 4B, a power extender module 160 may include a switchable input terminal 162, which is arranged to be connected to the power generation unit 110, and at least two interconnection terminals 163 suitable for connecting a power extender module 160b in series to (homologous interconnection terminals on) adjacent power extender modules 160a, 160c. The input terminal 162 and interconnection terminals 163 may be dry-mated or wet-mateable. Various dry-mated and wet-mateable cable connections are known per se in the art and will not be described in detail herein. Of the two interconnection terminals 163 on the power extender module 160 in figure 4B, one or two are switchable. Similarly, such power extender modules 160 which are equipped with three or more interconnection terminals 163 - to allow interconnection with branching points - can have the full number of switchable interconnection terminals 163, or fewer than this.

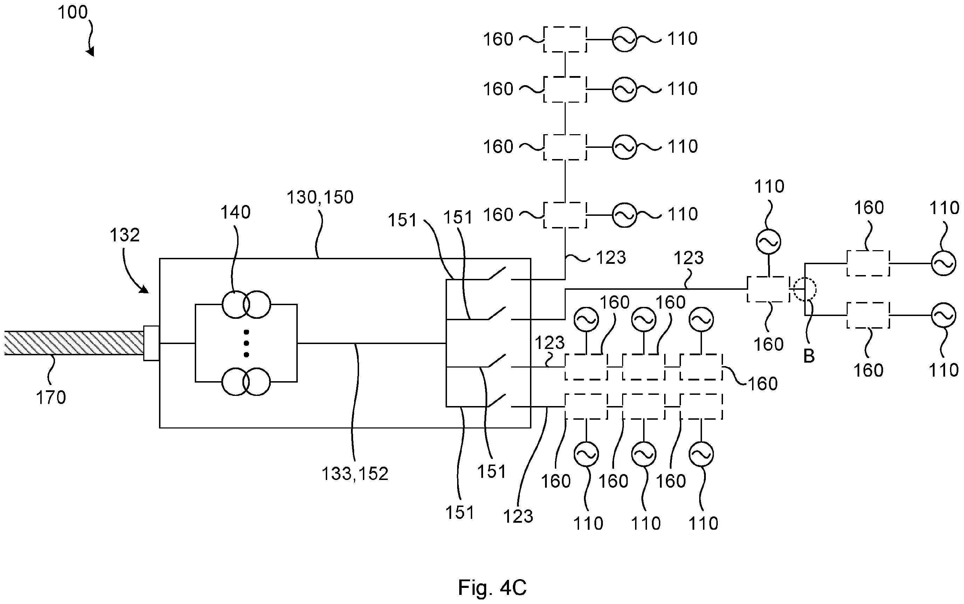

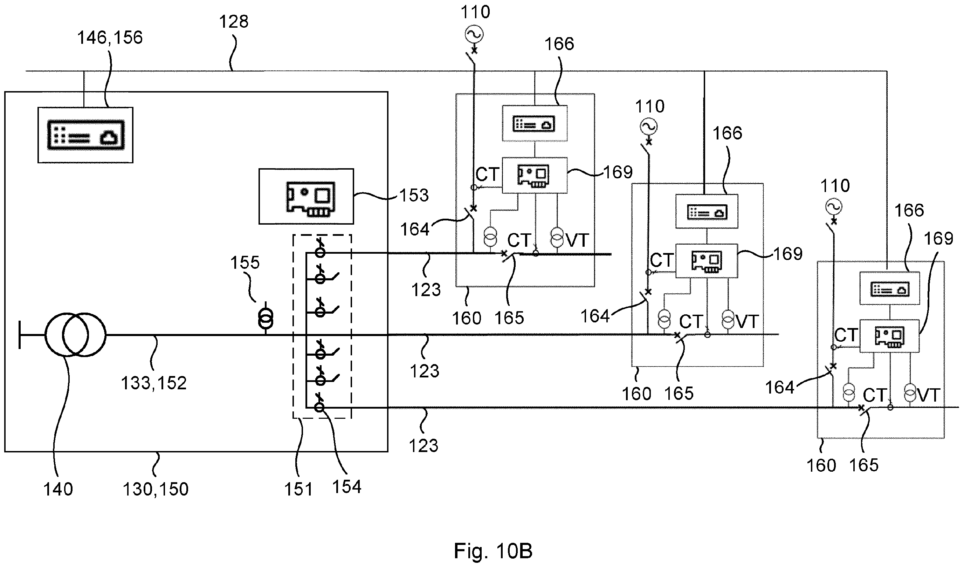

Figure 4C shows an alternative implementation of the power collection system in figure 4A. In the alternative implementation, the subsea power substation 130 and the subsea power collector module 150 are contained in a common housing. Structurally, this means that the subsea power substation 130 and the subsea power collector module 150 form a single subsea unit, which removes the need to provide two separate housings designed to be watertight in seabed conditions. Further, an internal connection between the transformer(s) 140 and the switchable input terminals 151 may constitute - at a time - the input terminal 133 of the subsea power substation 130 and the output terminal 152 of the power collector module 150. This internal connection need not be designed for seabed conditions. Functionally, the combining of the subsea power substation 130 and the subsea power collector module 150 could mean that some functionalities can be shared between the two modules, as will be explained in more detail below with reference to figure 10B.

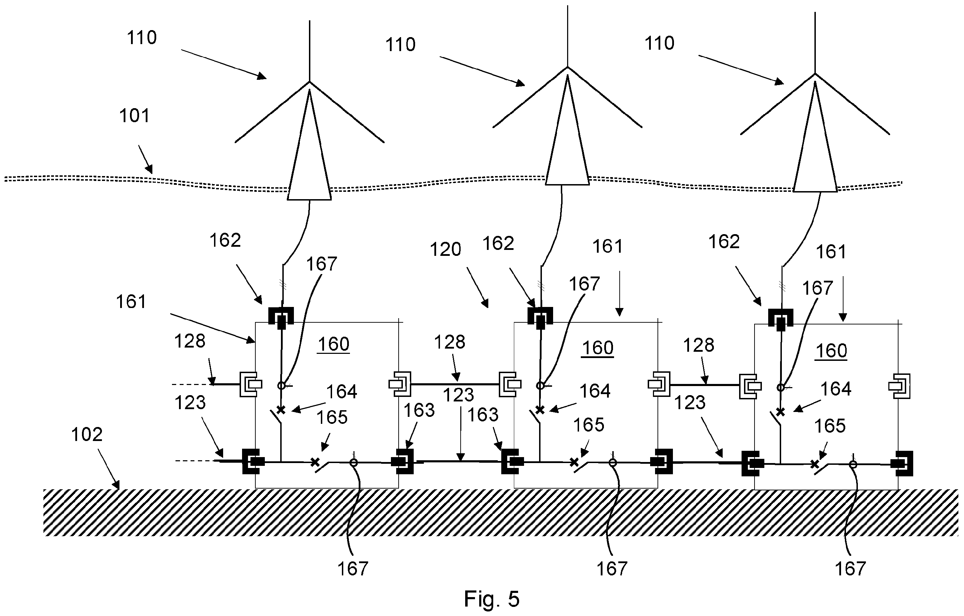

Figure 5 shows serially connected subsea power extender modules 160, through which offshore power generation units 110 are to be connected to an array cable of a subgrid 123 in the power collection system 100 (shown in full in figures 4A and 4C). To render the input terminal 162 and interconnection terminals 163 switchable, each power extender module 160 may be equipped with a branch switch 164 and one or two trunk switches 165. If a power extender module 160 has two trunk switches 165, these are preferably located on either side of the branch switch 164, so that the interconnection terminals 163 can be decoupled independently. This allows fault isolation with a finer granularity. In figure 5, where the power extender modules 160 have a single trunk switch 165 each, a second trunk switch 165 could be added to the immediate right of the left interconnection terminal 163.

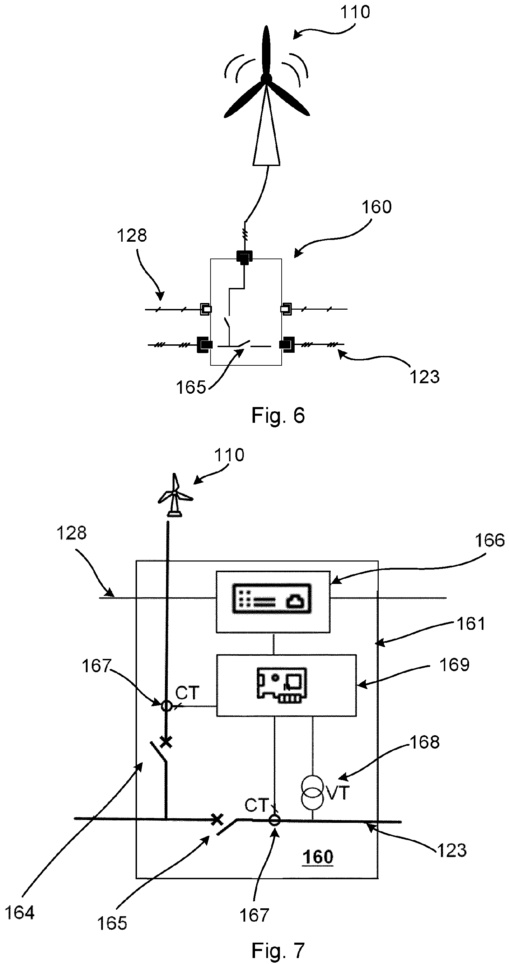

For purposes of monitoring the operation and/or protection and control functionalities, the power extender module 160 may include a current sensor 167. In particular, as shown in figure 5, there may be one current sensor 167 for measuring the current flowing through the closed branch switch 164 and one current sensor 167 for the current flowing through the trunk switch 165 when closed. (Alternatively, these sensors 167 may be localized outside the housing 161 of the power extender module 160, on segments of cable, in connection boxes, in the power generation unit 110 etc.) This way, a safety loop (safety logic) for each switch 164, 165 may be configured with a trigger condition in terms of data from the respective current sensor 167. The power extender module 160 may as well include a voltage sensor, as illustrated by figure 7 below.

The power extender module 160 may further comprise at least one connection to a data network 128, on which it may exchange protection and control related information with other components of the power collection system 100. Each connection to the data network 128 is a dry-mated or wet-mateable connection. The power extender module 160 is arranged to rest on the seabed 102 and therefore has a housing 161 designed for seabed conditions.

In the applicant's earlier disclosure EP4063646A1, several implementations of the power extender module 160 are described that are suitable for use with the teachings herein.

Figures 6 and 7 show an example power extender module 160, through which a data network 128 and a cable of a subgrid 123 pass, and an example inner structure of this. More precisely, in addition to the above-described housing 161, branch switch 164, trunk switch 165 and the two current sensors 167, the power extender module 160 may further comprise a metering interface 169, a protection and control (P&C) unit 166 and a voltage sensor 168. The voltage sensor 168 is arranged to measure the electric potential between the interconnection terminals 163, i.e., on a local segment of the subgrid 123 that passes through the power extender module 160.

The metering interface 169 may include functionalities for monitoring the power extender module 160 by means of the current sensors 167 and/or the voltage sensor 168 while the power collection system 100 operates normally. The monitoring may be used for purposes such as runtime automatic control, fine-tuning of control parameters, diagnostics, performance evaluation, providing data for financial transactions in respect of owners of the power generation units' 110 or the power consumer 170.

The P&C unit 166 executes one or more safety loops, in particular, by evaluating preconfigured trigger conditions corresponding to each of these. The basis of the evaluation is data from the current sensors 167 and/or the voltage sensor 168, which the P&C unit 166 receives through the metering interface 169. When the P&C unit 166 determines that a trigger condition is fulfilled, it causes the branch switch 164 or the trunk switch 165, or both of these, to open. Opening the trunk switch 165 may, depending on the topology of the subgrid 123 where the power extender module 160 is arranged, have the action of decoupling at least a portion of this subgrid 123. Because the P&C unit 166 is entrusted with safety-critical decision-making, the P&C unit 166 may be implemented with hardware and/or software that is specified or verified for a maximum probability of failure, e.g., by reference to a Safety Integrity Level (SIL, as specified in IEC 61508 and related standards). Because the metering interface 169 is normally not entrusted with safety-critical decision-making, it may have a lower SIL rating or no known rating at all.

The trigger conditions are primarily aimed at protecting the subgrid 123 locally, including the segment of the subgrid 123 that passes through the power extender module 160 between the interconnection terminals 163. The trigger conditions may also be suitable for protecting the power generation unit 110 connected to the power extender module 160. In different embodiments, at least one of the trigger conditions may represent a malfunction of a component in the power collection system 110, and in particular a hazard that threatens a cable in the subgrid 123. The trigger condition may correspond to nondirectional or directional overcurrent protection, directional earth fault (DEF) protection, surge protection, relay protection, or a combination of these. The trigger conditions and the ensuing action of the switches 164, 165 may be configured with a view to preventing malfunction in a component and/or to limiting the consequences of such a malfunction if it occurs. It is desirable to limit the propagation of electric faults, such as overcurrent, voltage spikes, surges and similar conditions that could cause temporary or permanent harm to electric equipment.

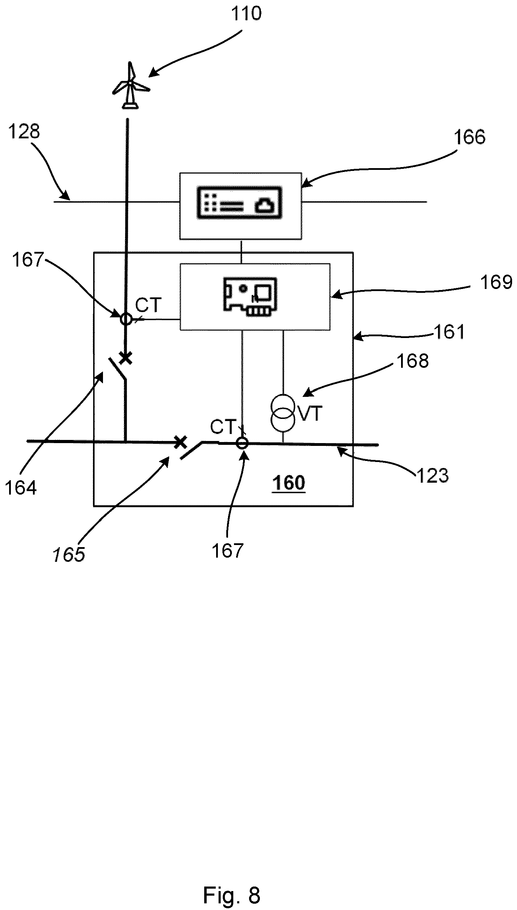

In the embodiment shown in figure 7, the described P&C functionalities are implemented in the P&C unit 166, that is, locally in the power extender module 160. In other embodiments, as suggested in figure 8, the P&C functionalities may be externalized. For example, the P&C functionalities may be implemented in a processing resource co-located with the power generation unit 110 that is connected to the power extender module 160, such as a processor responsible for P&C functionalities of the wind generation unit 110. Another option is to implement the P&C functionalities of the power extender module 160 in a remote processing resource (not shown) which is connected to that power extender module over the data network 128. Because these external processing resources are thus configured to perform safety-critical decision-making, they would normally be specified or verified for a maximum probability of failure.

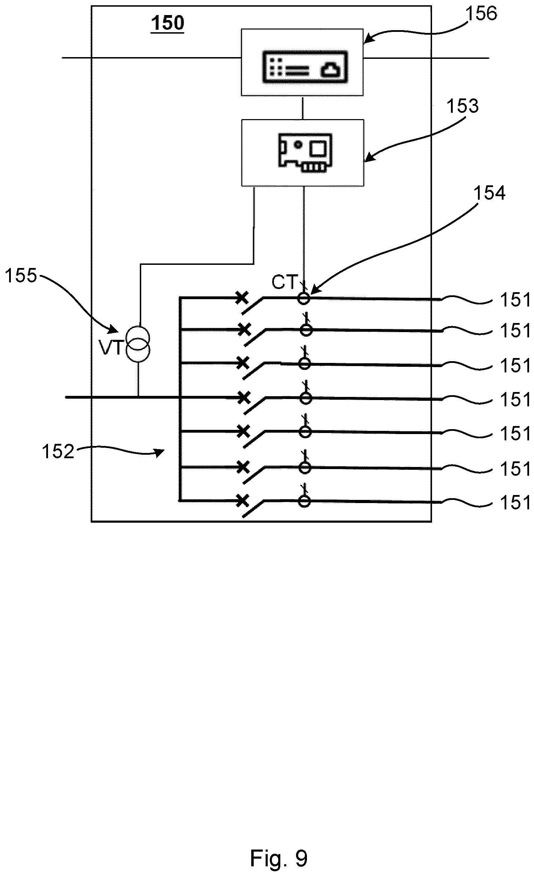

With reference to the embodiment in figure 9, the power collector module 150 will now be described in more detail. The power collector module 150 comprises a plurality of input terminals 151 and at least one output terminal 152. Each input terminal 151 is arranged to be connected to a subgrid 123 of the power collection system 100, and it is provided with switching circuitry allowing the subgrid 123 to be decoupled. The input terminals 151 are further provided with current sensors 154, which report sensor data (e.g., current values) to a metering interface 153. The output terminal, for its part, 152 is provided with a voltage sensor 155, which too reports its sensor data to the metering interface 153.

It is emphasized that, within the scope of the present disclosure, the current sensors 154 and the voltage sensor 155 can have different localizations than the one shown in figure 9. For example, equivalent current data can be obtained, by linearly combining local current values if necessary, from current sensors that are mounted on cables making up the subgrid 123 or from current sensors in any power extender modules 160 of the subgrid 123. Similarly, equivalent voltage data can be reported by a voltage sensor on an input terminal 133 of the subsea power substation 130.

The power collector module 150 is arranged to rest on the seabed 102. Its housing should be designed for watertightness in seabed conditions and suitable for long-time exposure to seawater.

The metering interface 153 may be configured for tasks similar to those performed by the metering interface 169 of the power extender module 160. This is to say, the metering interface 153 may carry out supervision of the power collection system 100 in normal operation based on data provided by the current sensors 154 and/or the voltage sensor 155. The supervision may be used for runtime automatic control, fine-tuning of control parameters, diagnostics, performance evaluation, accounting, and related purposes. Data from one or more metering interface 153 may be collected and displayed at an onshore operator interface.

The power collector module 150 further comprises a P&C unit 156, which implements P&C functionalities locally in the power collector module 150 and is connected to a data network. An alternative to the embodiment shown in figure 9 is to implement the P&C functionalities in a remote processing resource, with which the power collector module 150 communicates over said data network. The P&C functionalities may include one or more safety loops, such as preconfigured trigger conditions which can be evaluated based on data from the current sensors 154 and/or the voltage sensor 155, which the P&C unit 156 receives by the intermediary of the metering interface 153. When the P&C unit 156 determines that a trigger condition is fulfilled, it may cause the decoupling of one or more of the input terminal 151 by opening corresponding switches. Opening one of the switches may, depending on the topology of the connected subgrid 123, have the action of decoupling at least a portion of this subgrid 123. Because the P&C unit 156 is entrusted with safety-critical decision-making, the P&C unit 156 may be implemented with hardware and/or software specified or verified for a maximum probability of failure, e.g., a certain SIL. Because the metering interface 153 is normally not entrusted with safety-critical decision-making, it may have a lower SIL or none at all.

The trigger conditions to be evaluated by the power collector module 150 are primarily aimed at protecting the subgrids 123 that are connected to the input terminals 151, especially to prevent or stop hazards that threaten cables making up these subgrids 123. The trigger condition may correspond to nondirectional or directional overcurrent protection, DEF protection, surge protection, relay protection, or a combination of these. The trigger conditions and the switching action that they activate may be configured so as to prevent malfunction in a component and/or to limit the consequences of such a malfunction if it occurs. Another aim is to limit the propagation of harmful electric waveforms in the power collection system 100.

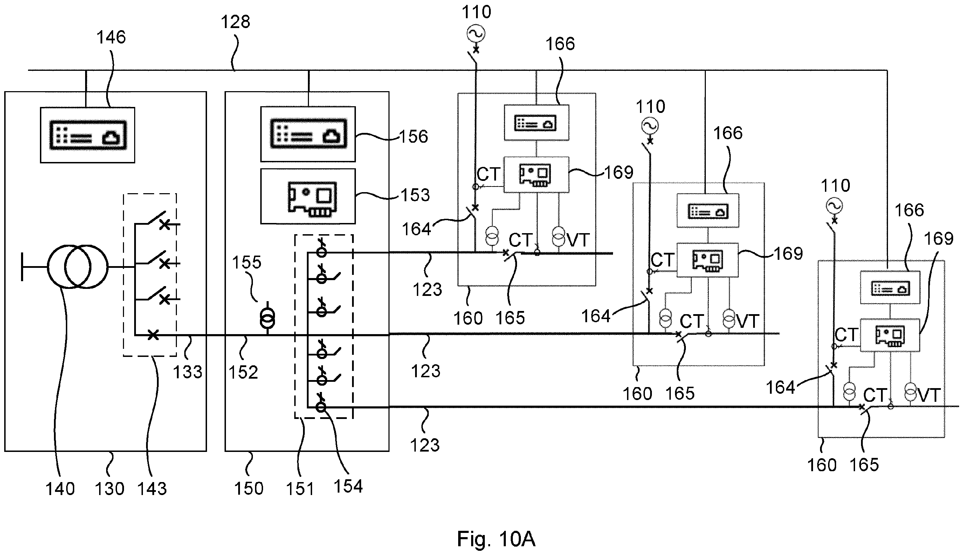

Figure 10A shows a portion of a power collection system with coordinated P&C functionalities. The power collection system has a subsea power substation 130, which includes a fixed number of input terminals 133 which are connected via switches 143 to a primary side of a transformer 140. The secondary side of the transformer 140 is suitable for being connected to a power consumer (not shown). To one or more of the input terminals 133 of the subsea power substation 130, it is possible to connect an output terminal 152 of a power collector module 150. As explained above, a power collector module 150 is a unit with a plurality of individually switchable input terminals 151 - each arranged to interface with a respective subgrid 123 - and with a metering interface 153 and P&C functionalities (here implemented as a local P&C unit 156) as well as associated current and voltage sensors 154, 155. The power collector module 150 connected to the subsea power station 130 maybe of different types, differing in particular with respect to their number of input terminals 151. It is also possible to connect a subgrid 123 directly to an input terminal 133 of the power substation 130. This flexibility makes it relatively easy for an owner of the power collection system to extend, reduce or modify the power collection system after deployment, e.g., in order to connect power generation units 110 in neighboring areas which are exploited at a later stage. This is achieved without replacing or modifying the relatively costly subsea power substation 130.

The power collection system in figure 10A is provided with a data network 128 through which the P&C functionalities in the subsea power substation 130, power collector modules 150 and power extender modules 160 can be coordinated. The data network 128 may be a digital packet-switched network, such as an ethernet network, and it may be electric or fiber-optical. In the embodiment depicted in figure 10A, the data network 128 has connections to respective P&C units 146, 156, 166 in each of the subsea power substation 130, power collector modules 150 and power extender modules 160. Each of the P&C units 146, 156, 166 may correspond to an Intelligent Electronic Device (IED) in the data network 128. The coordination may include sharing sensor data obtained by local current and voltage sensors with the other P&C units 146, 156, 166. Also status data, including indications that one or more trigger conditions have been fulfilled - this indicates a likely malfunction - may be shared among the P&C units 146, 156, 166. In some embodiments, the status data may as well be shared with a supervisory control and data acquisition (SCADA) system connected to the same data network 128.

In some embodiments, the P&C functionalities are delegated among groups of modules in the power collection system, such as from the power collector module(s) 150 to the power substation 130. The delegation may imply that a power collector module 150 sends a stream of sensor data to the power substation 130, wherein the power substation 130 evaluates the sensor data with respect to the trigger conditions and, if malfunction is determined, sends suitable switching instructions back to the power collector module 150. In particular, the P&C unit 146 of the substation 130 maybe configured to perform coordinated fault isolation in the power collection system by sending corresponding instructions to a combination of one or more power collector modules 150 and/or one or more power extender modules 160.

Figure 10B shows an alternative implementation of the power collection system in figure 10A. The main difference is that the subsea power substation 130 and the subsea power collector module 150 are contained in a common housing. The combining of the subsea power substation 130 and the subsea power collector module 150 into a common housing may allow various structural simplifications in the power collection system 100. Further, the fact that the subsea power substation 130 and the subsea power collector module 150 are co-located means that at least some functionalities - including support functionalities - can be shared. As shown in figure 10B, the P&C functionalities for the combined subsea power substation 130 and subsea power collector module 150 are supplied by a single unit 146, 156. This single unit has a connection to the P&C functionalities 166 of the power extender modules 160 over the data network 128. Moreover, the switches 143 which are arranged on the primary side of the transformer 140 in figure 10A are omitted in figure 10B, since the switchable input terminals 151 provide equivalent switching capabilities.

Figures 11 and 12 illustrate such coordinated fault isolation for two different subgrid topologies. Figure 11 shows a detail of a power collection system, and more precisely a subgrid 123 to which a cluster of power generation units 110 are connected. The subgrid 123 has a radial (or linear) topology, and itis connected to a single input terminal 151 of a subsea power substation 130 and power collector module 150 contained in a common housing. Although not explicitly shown in figure 11, the subsea power substation 130 includes at least one transformer 140, which is contained in said common housing and which is shared by the power generation units 110 of the cluster.

To illustrate coordinated fault isolation with an example, it is assumed that, during normal operation of the power collection system, certain current or voltage measurements suggest that an electric fault has occurred at reference symbol F. The illustrated switch positions indicate a possible reaction to this finding, aiming to isolate the electric fault F until it has been attended to, so as not to damage the power generation units 110 and the cables of the subgrid 123. The first power generation unit 110a can continue production. An imaginable alternative would be to keep the branch switch of the second power extender module 160b closed, so that the second power generation unit 110b too can continue production.

In figure 12, the subgrid 123 instead has a ring topology, and it is connected to two input terminals 151 of the power collector module 150, which - like in figure 11 - shares a common housing with a subsea power substation 130. Even after the fault F has been isolated, the two outer power generation units 110d, 110e can continue to deliver electric power to the power collection system. Here, too, it may be considered safe to keep the second power generation unit 110b in operation, namely by keeping the branch switch of the second power extender module 160b closed. If the third power extender module 160c had been equipped with two trunk switches, i.e. one switch for each interconnection terminal, it would have been possible to operate the third power generation unit 110c while at the same time isolating the electric fault F.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1. A power collection system (100) for collecting power from a plurality of offshore power generation units (110), the power collection system comprising:
a plurality of subgrids (123), each of which interconnects a cluster of one or more power generation units;
a subsea power collector module (150) comprising a plurality of individually switchable input terminals (151), each connected to one of the subgrids, and one output terminal (152); and
a subsea power substation (130) comprising at least one input terminal (133) connected to the output terminal of the power collector module and at least one transformer (140), which is shared by two or more clusters of power generation units,
wherein a secondary side (132) of the power substation is arranged to be connected to a power consumer (170).

2. The power collection system (100) of claim 1, wherein the subsea power substation (130) and the subsea power collector module (150) are contained in a common housing.

3. The power collection system (100) of claim 1 or 2, wherein at least one of the subgrids (123) connected to the power collector module (150) is connected to a single input terminal (151) thereof and/or at least one of the subgrids (123) connected to the power collector module (150) is connected to two input terminals (151) thereof.

4. The power collection system (100) of any of the preceding claims, wherein the power collector module (150) further includes a protection and control functionality (156) configured to decouple one of the connected subgrids (123) in response to a predefined condition representing a malfunction.

5. The power collection system (100) of claim 4, wherein the predefined condition represents a hazard to a cable in said subgrid (123).

6. The power collection system (100) of claim 4 or 5, wherein the protection and control functionality (156) detects the predefined condition at least based on data from a current sensor (154) which is associated with said subgrid (123), wherein optionally the power collector module (150) further includes a metering interface (153) configured to collect said data and provide it to the protection and control functionality.

7. The power collection system (100) of any of claims 4 to 6, wherein the protection and control functionality (156) detects the predefined condition at least based on data from a voltage sensor (155) associated with said subgrid (123).

8. The power collection system (100) of any of the preceding claims, further comprising:
a data network (128) which connects at least the power collector module (150) and
the power substation (130), and which is arranged to convey data related to at least protection and control functionalities.

9. The power collection system (100) of claim 8, wherein the protection and control functionalities are delegated among groups of modules in the power collection system, including the power collector module (150) and the power substation (130).

10. The power collection system (100) of claim 8 or 9, wherein the power substation (130) is configured to perform coordinated fault isolation by means of at least one connected power collector module (150).

11. The power collection system (100) of any of the preceding claims, wherein the power generation units (110) in at least one of the clusters are connected to the subgrid (123) via respective subsea power extender modules (160), each power extender module comprising:
a switchable input terminal (162) arranged to be connected to a power generation unit; and
at least two interconnection terminals (163), suitable for connecting the power extender module in series to adjacent power extender modules.

12. The power collection system (100) of claim 11, wherein at least one of the power extender modules (160) is associated with a protection and control functionality (166) implemented in a remote processing resource which is connected to that power extender module over a data network (128).

13. The power collection system (100) of claim 11, wherein at least one of the power extender modules (160) is associated with a protection and control functionality (166) implemented locally in that power extender module.

14. The power collection system (100) of claim 11, wherein at least one of the power extender modules (160) is associated with a protection and control functionality (166) implemented in a processing resource in the power generation unit (110) connected thereto.

15. The power collection system (100) of any of claims 11 to 14, wherein at least one power extender module (160) comprises a switchable interconnection terminal (163) allowing it to decouple an adjacent power extender module,
wherein the power extender module preferably comprises an interconnection terminal that is switchable independently of other interconnection terminals on that power extender module.

16. The power collection system (100) of claim 15, wherein the power extender modules (160) in said cluster of power generation units (110) are serially connected in a ring topology and comprise at least one switchable interconnection terminal (163) each.

17. The power collection system (100) of claim 16, wherein the power extender modules (160) in said cluster of power generation units (110) comprise exactly one switchable interconnection terminal (163) each.

18. The power collection system (100) of any of claims 15 to 17, wherein at least one power extender module (160) includes a metering interface (169) configured for monitoring the power extender module 160 while the power collection system 100 operates normally.
